(19) Europäisches Patentamt
European Patent Office
Office européen des brevets

(11) EP 0 658 639 B1

(12) EUROPÄISCHE PATENTSCHRIFT

(45) Veröffentlichungstag und Bekanntmachung des Hinweises auf die Patenterteilung:
**21.03.2001 Patentblatt 2001/12**

(51) Int Cl.[7]: **D01F 6/62**

(21) Anmeldenummer: **94118190.1**

(22) Anmeldetag: **18.11.1994**

(54) **Multifilamentgarn mit hoher Hydrolyse- und Aminolyseresistenz aus einem Polyester auf Basis von Poly- (1,4-bis-methylencyclohexanterephthalat) und Verfahren zu seiner Herstellung**

Multifilament yarn having high resistance to hydrolysis and aminolysis made from a polyester on the basis of poly(1,4-bis-methylene cyclohexane terephthalate) and process for its production

Fil multifilament d'un polyester à base de poly (1,4-bis-méthylène cyclohexanetéréphthalat) avec haute résistance à l'hydrolyse et l'aminolyse et procédé pour sa fabrication

(84) Benannte Vertragsstaaten:
**DE ES FR GB IT NL**

(30) Priorität: **01.12.1993 DE 4340869**

(43) Veröffentlichungstag der Anmeldung:
**21.06.1995 Patentblatt 1995/25**

(73) Patentinhaber: **ARTEVA TECHNOLOGIES S.à.r.l.**
**8001 Zürich (CH)**

(72) Erfinder: **Leumer, Gerhard, Dr.**
**D-86399 Bobingen (DE)**

(74) Vertreter: **Zounek, Nikolai, Dipl.-Ing. et al**
**Patentanwaltskanzlei Zounek,**
**Industriepark Kalle Albert,**
**Gebäude H287**
**65174 Wiesbaden (DE)**

(56) Entgegenhaltungen:
**WO-A-90/12918**
**CH-A- 513 992**
**DE-A- 2 814 104**
**DE-B- 1 222 205**
**GB-A- 1 110 752**

EP 0 658 639 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft ein Multifilamantgarn mit hoher Hydrolyse- und Aminolyseresistenz aus einem Polyester auf Basis von Poly-(1,4-bis-methylen-cyclohexyl-terephthalat), bei dem mindestens 85 mol-% der Diol-Baugruppen des Polyesters 1,4-bis-methylen-cyclohexyl-Gruppen sind und das Garn nach einer Hydrolyse- oder Aminolysebehandlung eine Restfestigkeit von mindestens 85 % der Anfangsfestigkeit hat sowie ein Verfahren zur Herstellung eines derartigen Multifilamentgarns.

Für einige Einsatzgebiete technischer Polyesterfäden wird die Forderung nach besonders hoher Resistenz gegen wäßrige oder basische Medien erhoben. Dies gilt beispielsweise für Verstärkungsfäden in gummierten Materialien wie Schläuchen, Förderbändern, Luftfedern, Keilriemen und Reifen, da diese Materialien unter den Bedingungen der Vulkanisation einer Aminolyse bzw. basischen Hydolyse ausgesetzt sind. Auch für technische Polyesterfasermaterialien wie Fäden, Multifilamentgarne, Stapelfasergarne oder Vliese, die als Gewebe, Gestricke oder in Vliesform für technische Einsatzgebiete wie z. B. zur Herstellung von Papiermaschinensieben und für Filtermaterialien vorgesehen sind, bei denen sie im Gebrauch ständig mit wäßrigen, ggf. sauren oder alkalischen Lösungen in Berührung kommen und darüber hinaus möglicherweise auch noch hohen mechanischen Dauerbeanspruchungen unterliegen, ist es von erheblicher Bedeutung, daß die Fasermaterialien unter diesen Bedingungen langfristig ihre Festigkeit beibehalten. Das gleiche gilt für Fasermaterialien, die für die Verstärkung von Schlauchmaterialien eingesetzt werden, da sie auch in diesem Fall direkt mit wäßrigen, sauren oder basischen Medien in Berührung kommen können.

Die Beständigkeit von herkömmlichen Poylesterfäden aus Polyethylenterephthalat ist für viele technische Anwendungen zwar ausreichend und kann zudem durch verschiedene Maßnahmen, wie z.B. hohes Molekulargewicht oder Carboxylendgruppen-Verschluß gesteigert werden, bleibt aber begrenzt auf im günstigsten Fall einer Restfestigkeit nach Hydrolyse von ca. 60 %.

Aus der DE-A 1 222 205 ist die Verwendung von Polyestern bekannt, deren Glykolkomponente mindestens zu 50 mol-% aus cis- und/oder trans-1,4-Cyclohexandimethanol und deren Säurekomponente zu mindestens 50 mol-% aus Terephthal-, Orthophthal- oder Isophthalsäure oder 1,4-Cyclohexandicarbonsäure oder deren Mischung besteht, zum Herstellen von Fäden oder Folien. Die Festigkeit von Fäden aus Poly-1,4-Cyclohexylendimethylenterephthalat bei 21 °C beträgt im trockenen Zustand vor der Hitzefixierung 2,84 g/den und nach der Hitzefixierung 2,88 g/den. Die hydrolytische Stabilität derartiger Fäden in wäßriger Natronlauge bei 50 °C liegt nach einer Tauchzeit von 24 Stunden bei 95 % der ursprünglichen Festigkeit bzw. die Dehnung bei 90 %.

Nun sind auch Polyestermaterialien bekannt, die deutlich bessere Beständigkeiten gegen Hydrolyse aufweisen, wie z.B. Poly-(1,4-bis-methylen-cyclohexan-terephthalat) aus dem bereits Monofile hergestellt worden sind, die eine ausgezeichnete Hydrolysebeständigkeit aufweisen. So werden beispielsweise in der WO 90/12918 Papiermaschinensiebe aus Monofilamenten aus Poly-(1,4-bis-methylen-cyclohexanterephthalat) beschrieben, die eine sehr gute Hydrolysebeständigkeit aufweisen. Diese Filamente haben gemäß Seite 7 dieser Druckschrift typischerweise Reißfestigkeiten im Bereich von 2,4 bis 4,3 g/den, entsprechend 21 bis 38 cN/tex, bei einem Thermoschrumpf $S_{200}$ von 0.2 bis 20.5 %. Diese Festigkeit ist zwar für den Einsatz in Papiermaschinensieben und für Textilmaterialien ausreichend, sie genügt aber nicht den Anforderungen, die üblicherweise an Fasermaterialien für den technischen Einsatz z.B. auf den oben genannten Gebieten gestellt werden.

Während in der angegebenen WO 90/12918 nur die Herstellung von Monofilamenten beschrieben worden ist, findet sich in der deutschen Offenlegungsschrift 2814104 auch eine Beschreibung der Herstellung von Multifilamentgarnen aus Poly-(1,4-bis-methylen-cyclohexan-terephthalat). Gemäß den Angaben in dieser Druckschrift werden die Filamente mit Abzugsgeschwindigkeiten von über 4000 m/min. ersponnen. Dabei werden die Spinnbedingungen so eingestellt, daß sich eine hohe Kristallinität der Filamente ergibt. Über die Verstreckbedingungen der erhaltenen Spinnfasern werden in dieser Druckschrift keine Angaben gemacht. Gemäß Seite 15 weisen die so erhaltenen Filamente Festigkeitswerte von 18 cN/tex bei Reißdehnungen von 39 bzw. 37 % auf.

In den britischen Patentschriften 1 110 751 und 1 110 752 werden Reifenkorde aus Polyestern, insbesondere aus Polyethylenterephthalat, aber auch aus Poly-(1,4-bis-methylen-cyclohexan-terephthalat) beschrieben, die sich durch einen besonders günstigen Hitzeschrumpf, durch hohe Aminolysebeständigkeit und durch eine geringe Hitzeentwicklung beim Walken auszeichnen. In diesen Druckschriften wird der hohe Anfangsmodul von Fasermaterialien aus Poly-(1,4-bis-methylen-cyclohexanterephthalat) hervorgehoben; über deren Festigkeit werden in diesen Druckschriften keine Angaben gemacht. Auch die Spinn- und Verstreckbedingungen bei der Herstellung des Reifenkords sind diesen Druckschriften nicht zu entnehmen.

In der Veröffentlichung "Struktur und Eigenschaften einer neuen Polyesterfaser" von E.V. Martin und H. Busch in Angew. Chem. 74, (1962), Seiten 624 bis 628, werden Fasern aus Poly-(1,4-bis-methylen-cyclohexan-terephthalat), insbesondere die Abhängigkeit ihrer physikalischen Eigenschaften von der Konformation der Grund-Baugruppe und ihrer Kristallstruktur, beschrieben.

Je nach den Herstellungsbedingungen sollen diese Fasern eine feinheitsbezogene Höchstzugkraft von bis zu 46,6 cN/tex, allerdings bei einer Reißdehnung von nur 10 %, aufweisen. Die Herstellungsbedingungen, die zu derartigen

Fasern führen, sind von den Autoren jedoch nicht angegeben worden. Die von Martin und Busch angegebenen hohen Festigkeiten der von ihnen beschriebenen Fasern finden sich in später erschienenen Quellen nicht mehr.
Aus der Veröffentlichung "Polyester Fibers other than PET" von J.E. McIntyre (Department of Textile Industries, The University of Leeds, Leeds, UK) geht hervor, daß bis dahin bekannte Poly-(1,4-bis-methylen-cyclohexan-terephthalat)-Filamente Reißfestigkeiten von nur 18 bis 22 cN/tex aufweisen, was mit den Angaben in der DE-A-28 14 104, angemeldet im Jahre 1978, praktisch übereinstimmt.
Noch etwas geringere Festigkeitswerte, nämlich ca. 1,4 g/den, entsprechend 12,4 cN/tex, werden in der technischen Informationsschrift "Thermal and Hydrolytic Stability of (R)KODEL Polyester Fiber" von Eastman Textile Fibers, erschienen 1974, angegeben.

Für den technischen Einsatz haben die bisher bekannten Poly-(1,4-bis-methylencyclohexan-terephthalat)-Filamente somit den gravierenden Nachteil, daß sie eine relativ geringe feinheitsbezogene Höchstzugkraft haben, die bei hohen Festigkeitsforderungen durch Einsatz hoher Materialmengen ausgeglichen werden muß.

Aufgabe der Erfindung ist es technische Multifilamentgarne aus Poly-(1,4-bis-methylen-cyclohexan-terephthalat) herzustellen, deren textile und mechanischen Eigenschaften weit über den der bekannten Monofilamenten bzw. Multifilamentfasermaterialien liegen.

Die Lösung dieser Aufgabe besteht aus einem Multifilamentgarn mit hoher Hydrolyse- und Aminolyseresistenz aus einem Polyester auf Basis von Poly-(1,4-bis-methylen-cyclohexyl-terephthalat), bei dem mindestens 85 mol-% der Diol-Baugruppen des Polyesters 1,4-bis-methylen-cyclohexyl-Gruppen sind und das Garn nach einer Hydrolyse- oder Aminolysebehandlung eine Restfestigkeit von mindestens 85 % der Anfangsfestigkeit hat, dadurch gekennzeichnet, daß das Garn eine feinheitsbezogene Höchstzugkraft von über 40 cN/tex aufweist, daß die Restfestigkeit nach einer Aminolysebehandlung in einer 5 %igen Ethylendiaminlösung von 80 °C und einer Lagerzeit von 48 Stunden bzw. nach einer Hydrolysebehandlung, bei der das Garn 72 Stunden in Sattdampf bei 135 °C gelagert ist, vorhanden ist und daß es aus Polyestern besteht, deren Polymerketten aus

85 bis 100 Mol.-% Baugruppen der Formel I

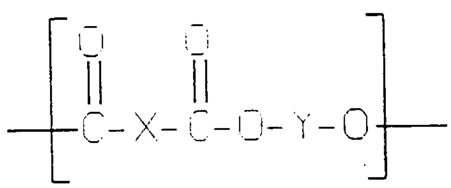

(I)

und 15 bis 0 Mol.-% Baugruppen der Formel II

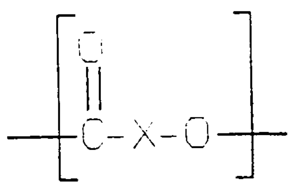

(II)

aufgebaut sind, worin

X zu mehr als 85 Mol.-% aromatische Reste mit 5 bis 16, vorzugsweise 6 bis 12 C-Atomen und maximal 15 Mol.-% aliphatische Reste mit 4 bis 10 Kohlenstoffatomen, vorzugsweise 6 bis 8 Kohlenstoffatomen, bedeutet,
Y zu mindestens 85 Mol.-% 1,4-Bis-methylen-cyclohexangruppen und zu maximal 15 Mol.-% geradkettiges oder verzweigtes Alkandiyl mit 2 bis 16, vorzugsweise 2 bis 8, C-Atomen oder

Reste der Formel $-(CH_2CHR-O)_n-CH_2CHR-$, worin R für Methyl oder Wasserstoff steht und n eine ganze Zahl von 1 bis 40 bedeutet, wobei n = 1 oder 2 für Anteile bis zu 15 Mol.-% bevorzugt sind und Gruppen mit n = 10 bis 40 vorzugsweise nur in Anteilen von unter 5 Mol.-% vorhanden sind, oder
Reste der Formel $-(CH_2)_q-Q-(CH_2)_q-$ bedeutet,
worin
Q für O oder S (ein Sauerstoff- oder Schwefelatom) steht, wobei q eine ganze Zahl von 2 bis 8 bedeutet oder
Q Cycloalkan-diyl, oder ein ein- oder zweikerniger kondensierter oder nicht kondensierter aromatischer Rest, insbesondere Phenylen oder eine Rest der Formel III

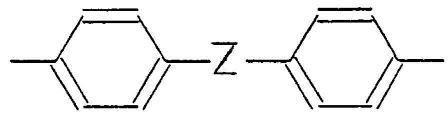

(III)

ist, worin Z Polymethylen oder Alkylen mit 1 bis 4 Kohlenstoffatomen, $-SO_2-$, -COO-, -O- oder -S- bedeutet.

Das Multifilamentgarn nach der Erfindung hat somit hervorragende Beständigkeit gegenüber Hydrolyse und Aminolyse.

Die angegebenen Werte der Restfestigkeit nach der Aminolysebehandlung gelten für eine 48-stündige Lagerung der Faserproben in 5 %iger Ethylendiaminlösung (pH 11,8) bei 80 °C. Zur Aminolysebehandlung werden Rohzwirne (110 dtex x1 x2 Z/S 420) in Form von Strängchen aus dem erfindungsgemäßen Fasermaterial in eine 5 %ige Ethylendiaminlösung eingebracht, die in einem Kolben mit Rückflußkühler im thermostatisierten Wasserbad auf einer Temperatur von 80 °C gehalten wird. Nach der gewünschten Lagerzeit werden die Proben herausgenommen, sorgfältig gewässert und getrocknet. Anschließend wird die Festigkeit geprüft und zur Ausgangsfestigkeit der Proben ins Verhältnis gesetzt. Die Lagerzeit der Proben in der Ethylendiaminlösung wird zwischen 1 und 48 Stunden variiert. Die dabei erhaltenen Meßergebnisse sind in der Figur 1 veranschaulicht.

Die angegebenen Werte der Restfestigkeit nach der Hydrolysebehandlung basieren auf einer 72-stündigen Lagerung der Polyesterfilamente in Sattdampf bei 135 °C. Zur Hydrolyseprüfung werden Probanden der Rohzwirne (110 dtex x1 x2 Z/S 420) erfindungsgemäßer Fasermaterialien in Form von Strängchen in einer Sattdampfatmosphäre von 135 °C gelagert. Nach Ablauf der vorgesehenen Lagerzeit werden die Probanden getrocknet und ihre Festigkeit bestimmt. Die erhaltenen Festigkeitswerte werden zur Ausgangsfestigkeit ins Verhältnis gesetzt. Die bei dieser Prüfung an erfindungsgemäßen Fasermaterialien erhaltenen Hydrolyseresistenzwerte für Lagerzeiten von 20 bis 72 Stunden sind in der Figur 2 veranschaulicht.

Zum Vergleich sind in den Figuren 1 und 2 entsprechende Aminolyseresistenz- und Hydrolyseresistenzwerte von technischen Polyethylenterephthalatgarnen eingetragen. In den Grafiken der Figuren 1 und 2 sind die für Polyethylenterephthalat-Garn der spezifischen Viskosität von 1,05 erhaltenen Werte durch den ununterbrochenen Kurvenzug, die Werte für Polyethylenterephthalat-Garn der spezifischen Viskosität von 1,20 durch die gestrichelte Kurve und die für erfindungsgemäße Multifilamentgarne erhaltenen Werte durch die gepunktete Kurve dargestellt.

Man erkennt an dem wesentlich geringeren Abfall der gepunkteten Kurve die erhebliche Überlegenheit der erfindungsgemäßen Garne gegenüber Polyethylenterephthalat-Garnen in Bezug auf Aminolyse-und Hydrolyse-Resistenz.

Je nach dem geplanten Einsatzzweck können die erfindungsgemäßen Garne mit einer Kombination besonderer anwendungsgünstiger Eigenschaften ausgestattet werden.

Eine bevorzugte Gruppe erfindungsgemäßer Garne weist eine feinheitsbezogene Höchstzugkraft von über 40 cN/tex, insbesondere von über 45 cN/tex, und einen Trockenhitzeschrumpf $S_{200}$ von unter 10 % auf.

Eine weitere bevorzugte Gruppe erfindungsgemäßer Garne weist eine feinheitsbezogene Höchstzugkraft von über 40 cN/tex und einen Trockenhitzeschrumpf $S_{200}$ von unter 5 % auf.

Ferner sind erfindungsgemäße Garne bevorzugt, die eine feinheitsbezogene Höchstzugkraft von über 50 cN/tex und einen Trockenhitzeschrumpf $S_{200}$ von über 7 % aufweisen.

Besonders bevorzugt sind erfindungsgemäße Garne, für die zwischen der feinheitsbezogenen Höchstzugkraft F (in cN/tex) des Garns und seinem Trockenhitzeschrumpf $S_{200}$ (in %) der aus Gleichung (1) ersichtliche Zusammenhang besteht:

$$F = K+0,267*S_{200}+0,054*S_{200}^2 \qquad (1)$$

wobei der Summand K einen Wert von über 40 (Kurve 2), vorzugsweise von 44 (Kurve 3) bis 49 (Kurve 4), insbesondere von 45 bis 48, hat und $S_{200}$ ein Wert von 0 bis 20, vorzugsweise von 0 bis 12 ist.

Die Figur 3 zeigt in einem Höchstzugkrafts/Trockenhitzeschrumpf-Diagramm die Gebiete in denen die bisher bekannten und die erfindungsgemäßen Poly-(1,4-bis-methylen-cyclohexan-terephthalat)-Fasermaterialien liegen.

Die im Zeitraum von 1974 bis 1989 bekannt gewordenen Fasermaterialien liegen in dem einfach schraffierte Gebiet A unterhalb der Geraden 1.

Die erfindungsgemäßen Multifilamentgarne liegen vorzugsweise im Gebiet oberhalb der Kurve 2, insbesondere in dem zwischen den Kurven 3 und 4 eingeschlossenen doppelt schraffierten Gebiet B.

Der Trockenhitzeschrumpf der erfindungsgemäßen Multiflamentgarne bei 200 °C liegt im Bereich von 1 bis 20 %, bevorzugt im Bereich von 1 bis 12 %, die Bruchdehnung im Bereich von 5 bis 20 %, bevorzugt im Bereich von 10 bis 20 %.
Die Bestimmung des Heißluftschrumpfs bei 200°C ($S_{200}$) erfolgt nach DIN 53866, Teil 3.

Die erfindungsgemäßen Multifilamentgarne bestehen aus Polyestern deren Polymerketten aus 85 bis 100 Mol.-% Baugruppen der Formel I

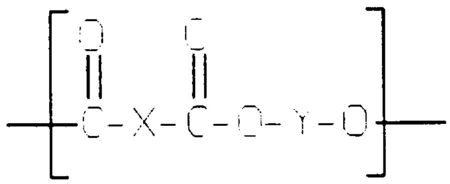

(I)

und 15 bis 0 Mol.-% Baugruppen der Formel II

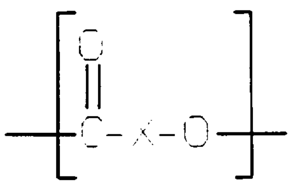

(II)

aufgebaut sind, worin

X zu mehr als 85 Mol.-% aromatische Reste mit 5 bis 16, vorzugsweise 6 bis 12 C-Atomen und maximal 15 Mol.-% aliphatische Reste mit 4 bis 10 Kohlenstoffatomen, vorzugsweise 6 bis 8 Kohlenstoffatomen, bedeutet,

Y zu mindestens 85 Mol.-% 1,4-Bis-methylen-cyclohexangruppen und zu maximal 15 Mol.-% geradkettiges oder verzweigtes Alkandiyl mit 2 bis 16, vorzugsweise 2 bis 8, C-Atomen oder
Reste der Formel $-(CH_2CHR-O)_n-CH_2CHR-$, worin R für Methyl oder Wasserstoff steht und n eine ganze Zahl von 1 bis 40 bedeutet, wobei n = 1 oder 2 für Anteile bis zu 15 Mol.-% bevorzugt sind und Gruppen mit n = 10 bis 40 vorzugsweise nur in Anteilen von unter 5 Mol.-% vorhanden sind, oder
Reste der Formel $-(CH_2)_q-Q-(CH_2)_q-$ bedeutet,
worin
Q für O oder S (ein Sauerstoff- oder Schwefelatom) steht, wobei q eine ganze Zahl von 2 bis 8 bedeutet oder
Q Cycloalkan-diyl, oder ein ein- oder zweikerniger kondensierter oder nicht kondensierter aromatischer Rest, insbesondere Phenylen oder eine Rest der Formel III

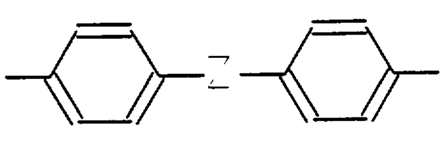

(III)

ist,
worin Z Polymethylen oder Alkylen mit 1 bis 4 Kohlenstoffatomen, $-SO_2-$, -COO-,-O- oder -S- bedeutet.

Die für Y stehenden 1,4-Bis-methylen-cyclohexangruppen der Formel IV können in cis- und trans-Form vorliegen. Die in den Polyestern der erfindungsgemäßen Multifilamentgarne enthaltenen 1,4-Bis-methylen-cyclohexangruppen der Formel IV

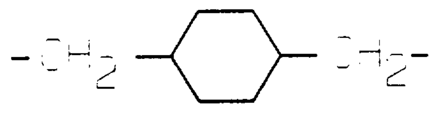

(IV)

haben vorzugsweise einen trans-Anteil von mindestens 50%, insbesondere 60%, beispielsweise von 75%. Entsprechend liegen die Maximal-Anteile der cis-Form vorzugsweise bei 50%, insbesondere bei 40% beispielsweise bei 25%. Dabei liegt nach den Angaben von Martin und Busch (a.a.O) die cis-Konfiguration wahrscheinlich in der sog. Wannenform der Formel IVa, die trans-Konfiguration bevorzugt in der sog. Sesselform der Formel IVb vor.

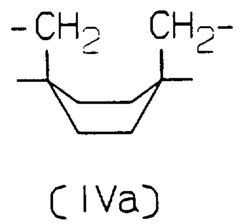

(IVa)

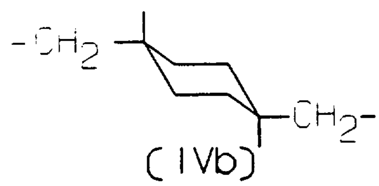

(IVb)

Besonders bevorzugt sind erfindungsgemäße Garne aus Polyestern der oben angegebenen Zusammensetzung, die ausschließlich aus Baugruppen der Formel I aufgebaut sind, in denen 90 bis 100 Mol.-%, vorzugsweise 95 bis 100 Mol.-%, der Reste X p-Phenylenreste und 0 bis 10 Mol.-%, vorzugsweise 0 bis 5 Mol.-% der Reste X m-Phenylenreste sind. Ein derartiger Polyesterrohstoff, der sich gut zur Herstellung der erfindungsgemäßen Multifilamentgarne nach dem erfindungsgemäßen Verfahren eignet, ist beispielsweise der handelsübliche Copolyester (R) KODAR THERMX 13319 der Firma Eastman Chemical Products Inc.

Bevorzugt sind ferner erfindungsgemäße Garne aus Polyestern der oben angegebenen Zusammensetzung in denen 85 bis 100 Mol.-% der Dioleinheiten 1,4-Bis-methylen-cyclohexaneinheiten und
0 bis 15 Mol% Ethylenglycoleinheiten und
0 bis 3 Mol.-% längerkettige Dioleinheiten sind.

Zweiwertige, Ethergruppen enthaltende Reste der Formel $-(CH_2CHR-O)_n-CH_2CHR$-sind solche, die sich von Diglykol, Triglykol oder Polyglykol mit einem mittleren Molekulargewicht von ca. 500 bis 2000 ableiten.

Beispiele für cycloaliphatische oder aromatische Reste, für die Q steht, sind Cyclohexan-1,4-diyl, 1,3- oder 1,4-Phenylen, sowie die Reste-Phenylen-O-Phenylen-, -Phenylen-S-Phenylen- oder $-Phenylen-SO_2-Phenylen-$.

Zweckmäßigerweise haben die Polyester der erfindungsgemäßen Garne eine spezifische Viskosität von 0,8 bis 1,7, vorzugsweise von 1,1 bis 1,5, gemessen in einer Lösung von 1 g des Polyesters in 100 ml Dichloressigsäure bei 25°C.

Vorzugsweise enthalten Polyester, die Baugruppen der Formel II aufweisen, 70 bis 99 Mol.-% ,insbesondere 85 bis 99 Mol.-%, Baugruppen der Formel I und 1 bis 30 Mol.-%, insbesondere 1 bis 15 Mol.-%, Baugruppen der Formel II.

Die aromatischen Reste, für die X steht, können im Rahmen der gegebenen Definition alle gleich sein, oder sie können verschieden sein.
Insbesondere können die oben genannten, von X repräsentierten Baugruppen, die zu mindestens 85 Mol.-% die Polyesterkette bilden, einzeln oder gemischt in der Polyesterkette vorliegen. Bevorzugt ist es, wenn die mindestens 85 Mol.-% der Polyesterkette von nur einem oder zwei Individuen aus der Gruppe der für diese Hauptkomponenten angegebenen Reste gebildet werden.
Eine eventuell gewünschte weitere Modifizierung der Polyesterkette erfolgt dann vorzugsweise durch andere Baugruppen im Rahmen der Definition, die für die zu maximal 15 Mol.-% vorhandenen, von X repräsentierten Baugruppen gegeben worden ist.

So können die mindestens 85 Gew.-% aromatischen Reste beispielsweise alle 1,4-Phenylenreste sein oder sie können sich beispielsweise im Molverhältnis im 80:20 bis 95:5 aus 1,4-Phenylen- und 1,3-Phenylenresten oder im Molverhältnis von 4:6 bis 6:4 aus 2,6-Naphylenresten und Biphenyl-4,4'-diyl-Resten zusammensetzen.
Bevorzugt sind Polyester, in denen X mindestens 95 Mol.-% aromatische und maximal 5 Mol.-% aliphatische Reste bedeuten, insbesondere aber solche, in denen X ausschließlich für aromatische Reste steht.

Auch die Reste, für die Y steht, können im Rahmen der gegebenen Definition alle gleich sein, oder sie können verschieden sein.
Insbesondere können die oben genannten, von Y repräsentierten Baugruppen, die zu bis zu 15 Mol.-% die Polyesterkette bilden, einzeln oder gemischt in der Polyesterkette vorliegen.
Eine eventuell gewünschte weitere Modifizierung der Polyesterkette erfolgt dann vorzugsweise durch andere Baugruppen im Rahmen der Definition, die für die zu maximal 15 Mol.-% vorhandenen, von Y repräsentierten Baugruppen gegeben worden ist.
Besonders bevorzugt sind erfindungsgemäße Garne aus Polyestern, in denen Y mindestens 95 Mol.-% 1,4-Bis-methylen-cyclohexan-Reste sind.

Bevorzugte aromatische Reste, für die X aber auch für O stehen, sind 1,4- und 1,3-Phenylen, 1,4-, 1,5-, 1,8-, 2,6- und 2,7-Naphthylen, 4,4'-Biphenylenylen, Furylen und Reste der Formel III

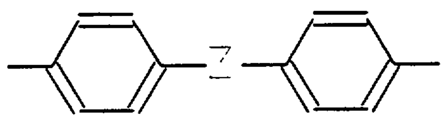

(III),

worin Z Polymethylen oder Alkylen mit 1 bis 4 Kohlenstoffatomen, $-SO_2-$, -COO-, -O- oder -S- bedeutet.

Die aromatischen Reste, für die X stehen, können ihrerseits noch einen oder zwei Substituenten tragen. In diesem Fall ist es jedoch bevorzugt, daß nur ein Anteil von bis zu 15 %, insbesondere von bis zu 7 % der vorhandenen aromatischen Reste substituiert ist. Vorzugsweise tragen die substituierten aromatischen Reste jeweils nur einen Substituenten. Besonders geeignete Substituenten sind Alkyl mit 1 bis 4 C-Atomen, Alkoxy mit 1 bis 4 C-Atomen, Chlor und die Sulfogruppe.

Reste, die sich von aliphatischen Dicarbonsäuren ableiten, und aromatische Reste, die gewinkelte Ketten liefern, beispielsweise Isophthalsäurereste, oder die sperrigere aromatische Kerne, wie den Naphthalinkern aufweisen, sowie die längerkettigen, für Y stehenden Baugruppen werden insbesondere dann in die Polyesterkette eingebaut, wenn eine Modifizierung der Eigenschaften des Polyesters erwünscht ist.
Bevorzugt sind erfindungsgemäße Garne aus Polyestern, die weniger als 7 % dieser modifizierend wirkenden Komponenten enthalten.

Besonders bevorzugt sind erfindungsgemäße Garne aus Polyestern, die zu mindestens 85 mol.-% aus 1,4-Bis-methylen-cyclohexyl-terephthalat-Gruppen (Formel V) aufgebaut sind.

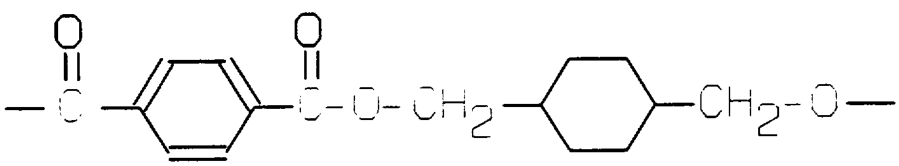

(V)

Bevorzugt sind auch erfindungsgemäße Garne aus Polyestern, die in der Kette neben Baugruppen der Formel V bis zu 10 Mol.-% anderer Bausteine aus den oben genannten Gruppen aufweisen und dadurch so modifiziert worden sind, daß bestimmte Gebrauchseigenschaften erhalten werden, wie z.B. Poly-(1,4-bis-methylen-cyclohexan-terephthalat), das durch Einbau von Sulfogruppen enthaltenden Bausteinen (z. B. Sulfo-isophthalsäure) eine Affinität zu basischen Farbstoffen erhalten hat.

Zusätzlich zu den oben angegebenen Modifizierungsmitteln, die in die Polyesterkette eingebaut werden, können auch weitere bekannte Substanzen entweder chemisch mit dem Polyester zur Reaktion gebracht oder dem Polyester zugemischt werden. Beispiele für derartige Zusätze sind Stabilisatoren, Endgruppenverschlußmittel und anorganische Substanzen, wie z.B. feinstverteilte Kieselsäure, Silikate, Aluminiumoxid oder Titandioxid. Typische Endgruppenverschlußmittel, die in der Regel dem Polyester in Mengen von 0.5 bis 10 Gew.-%, vorzugsweise 1 bis 4 Gew.-% zugesetzt werden, sind beispielsweise Carbodiimide wie das Homopolymer von 1,3,5-Tris-(1-methylethyl)-2,4-diisocyanato-benzol oder dessen Copolymer mit 2,6-Di-isopropylbenzoldiisocyanat. Ein handelübliches Endgruppenverschlußmittel dieser Art ist das (R) STABAXOL P oder (R) STABAXOL P-100 der Fa. Rhein-Chemie. Ein typischer Stabilisator ist z.B. der Thio-dipropionsäure-distearylester, der den Polyester gegen thermooxidativen Abbau schützt.

Ein weiterer Gegenstand der vorliegenden Erfindung ist ein Verfahren zur Herstellung der oben beschriebenen erfindungsgemäßen Multifilamentgarne. Bei diesem Verfahren wird ein Polyester auf der Basis von Poly-(1,4-bis-methylen-cyclohexyl-terephthalat) gemäß den oben angegebenen Definitionen in an sich bekannter Weise aus der Schmelze gesponnen, die ersponnenen Filamente durch Anblasen mit Kühlluft abgekühlt und mit einer Spinnabzugsgeschwindigkeit von unter 1500 m/min. abgezogen. Dabei wird die Schmelzetemperatur auf 295 bis 305 °C gehalten.

Es ist für die Herstellung der erfindungsgemäßen Multifilamentgarne von besonderer Bedeutung, bei der angegebenen Schmelzetemperatur von 295 bis 305 °C, die nur etwa 5 bis 10 °C über dem Schmelzpunkt des verwendeten Copolyesters auf Basis von Poly-(1,4-bis-methylen-cyclohexyl-terephthalat) liegt, zu spinnen. Es ist sehr überraschend, dass gerade in diesem relativ wenig oberhalb des Schmelzpunktes liegenden Spinntemperatur bereich die besten Ergebnisse erzielt werden, denn z.B. Polyethylenterephthalat wird üblicherweise bei einer Temperatur gesponnen, die etwa 30 °C über dessen Schmelzpunkt liegt.

Die ersponnenen Filamente werden kontinuerlich oder diskontinuierlich verstreckt, wobei zwei Streckstufen durchlaufen werden.

Die Vorverstreckung wird bei einer Temperatur zwischen 90 und 120 °C und mit hoher Streckspannung (>2 cN/tex bezogen auf den Spinntiter) durchgeführt und beträgt mehr als 70 % der Gesamtverstreckung. In der zweiten Verstreckstufe, die bei einer Temperatur oberhalb 240 °C durchgeführt wird, wird ein Verstreckverhältnis von > 1:1,2 eingestellt.

Zur Einstellung der gewünschten Reißdehnung und des erforderlichen Hitzeschrumpfs kann an die Verstrekkung der erfindungsgemäßen Filamente noch eine Fixier- und Relaxationsbehandlung bei Temperaturen oberhalb 230°C mit einem Schrumpfverhältnis von 1:0,98 bis 1:0,8 oder eine dritte Streckstufe bei Temperaturen oberhalb 230 °C mit einem Streckverhältnis von 1:1,05 bis 1:1,2 angeschlossen werden.

Besonders vorteilhaft ist es, die Spinnbedingungen, insbesondere die Intensität der Kühlung und die Abzugsgeschwindigkeit dabei so einzustellen, daß das erhaltene Filamentmaterial eine Dichte von unter 1,2 g/$cm^3$ aufweist. Dabei wird ein Spinngarn erhalten, das praktisch keine kristallinen Anteile enthält.

Besonders bevorzugt sind solche erfindungsgemäßen Poly-(1,4-bis-methylen-cyclohexan-terephthalat)-Multifilamentgarne und solche Ausführungsformen des erfindungsgemäßen Herstellungsverfahrens, die eine Kombination mehrerer bevorzugter Merkmale aufweisen.

Die folgenden Ausführungsbeispiele veranschaulichen die Herstellung und die Eigenschaften erfindungsgemäßer Poly-(1,4-bis-methylen-cyclohexan-terephthalat)-Multifilamentgarne.

Beispiel 1

Chips eines handelsüblichen Copolyesters auf Basis von Poly-(1,4-bis-methylen-cyclohexan-terephthalat-isophthalat)((R) KODAR THERMX 13319) mit einer spezifischen Viskosität von 1,459, gemessen in einer 1 gew.-%igen Lösung in Dichloressigsäure bei 25 °C, und mit einem Carboxylgruppengehalt von 3,6 mmol/kg werden 10 Stdn. bei 60-160°C im Vakuum getrocknet und anschließend bei 290-300 °C aufgeschmolzen und über Zahnrad-Spinnpumpen über einen Spinnpack mit Sand- und Drahtnetzfilter einer Spinndüse mit 200 Spinnöffnungen zugeführt. Die Schmelzetemperatur beträgt 298 °C.

Die aus der Düse austretenden Filamente werden durch Quer-Anblasen mit Luft von 30 °C abgekühlt, zusammengefaßt, mit Spinnpräparation versehen und mit einer Geschwindigkeit von 740 m/min abgezogen und aufgespult.

Der Spinntiter der so erhaltenen Multifilament-Spinnfäden betrug 4620 dtex, ihre Doppelbrechung betrug $9{,}3 \cdot 10^{-3}$, ihre Dichte, bestimmt in einer Gradientensäule, betrug 1,1982 g/$cm^3$ und die spezifische Viskosität des Filamentmaterials, bestimmt wie oben angegeben, betrug 1,230.

Die so hergestellten Multifilament-Spinnfäden wurden anschließend mehrstufig verstreckt, wobei in der ersten Stufe mit 100°C und in der zweiten Stufe bei 250°C gearbeitet wurde. Das Verstreckverhältnis wurde in der ersten Stufe auf 1:3,2, in der zweiten Stufe auf 1:1,35 eingestellt.

Anschließend wurden die verstreckten Fäden noch bei 230°C unter Zulassung von geringem Schrumpf (1:0,975) thermofixiert.

Das hergestellte Multifilamentgarn hatte folgende Eigenschaften:

Titer: 1070 dtex
Absolute Höchstzugkraft: 57,9 N
Feinheitsbezogene Höchstzugkraft: 54,1 cN/tex
Bruchdehnung: 10,5 %
Heißluftschrumpf bei 200 °C ($S_{200}$): 9,4 %
Spezifische Viskosität des Fasermaterials
(gemessen wie oben angegeben): 1,225
Dichte: 1,2315 g/$cm^3$
Carboxylgruppengehalt: 13,4 mmol/kg

Beispiele 2 bis 5.

In analoger Weise wie im Beispiel 1 beschrieben werden aus (R) KODEL THERMX 13319 - Chips erfindungsgemäße Multifilamentgarne unter variierten Bedingungen hergestellt.

Die Herstellungsbedingungen und die Eigenschaften der Spinnfäden und der fertig verstreckten und fixierten erfindungsgemäßen Multifilamentgarne sind in der folgenden Tabelle angegeben.

Die Abkürzung "SV" in der folgenden Tabelle bedeutet "spezifische Viskosität", die wie oben angegeben gemessen worden ist.

Tabelle

| Bedingung/Merkmal | Beispiel 2 | Beispiel 3 | Beispiel 4 | Beispiel 5 |
|---|---|---|---|---|
| **Spinnen** | | | | |
| SV der Chips | 1,459 | 1,459 | 1,459 | 1,461 |
| COOH-Gehalt d. Chips | 3,6 | 3,6 | 3,6 | 3,3 |
| Spinnabzugsgeschwindigkeit [m/min] | 740 | 740 | 740 | 1000 |
| Doppelbrechung Spinngarn | $9{,}3 \cdot 10^{-3}$ | $9{,}3 \cdot 10^{-3}$ | $9{,}3 \cdot 10^{-3}$ | $13{,}1 \cdot 10^{-3}$ |
| Dichte Spinngarn [g/cm$^3$] | 1,1982 | 1,1982 | 1,1982 | 1,1986 |
| SV des Spinngarns | 1,230 | 1,230 | 1,230 | 1,255 |
| **Verstrecken** | | | | |
| Temperatur Stufe 1 [°C] | 100 | 100 | 100 | 100 |
| Verstreckverhältnis Stufe 1 | 1:3,2 | 1:3,2 | 1:3,2 | 1:2,88 |
| Temperatur Stufe 2 [°C] | 250 | 250 | 250 | 250 |
| Verstreckverhältnis Stufe 2 | 1:1,36 | 1:1,36 | 1:1,36 | 1:1,295 |
| **Fixierung** | | | | |
| Fixiertemperatur [°C] | 230 | 230 | 230 | 230 |
| Schrumpfverhältnis | 1:0,93 | 1:0,91 | 1:0,888 | 1:0,91 |
| **Garndaten** | | | | |
| Titer [dtex] | 1118 | 1129 | 1153 | 1145 |
| Absolute Höchstzugkraft [N] | 55,0 | 55,6 | 54,0 | 55,5 |
| Feinheitsbezogene Höchstzugkraft [cN/tex] | 49,2 | 49,3 | 46,9 | 48,5 |
| Bruchdehnung [%] | 13,9 | 16,3 | 18,9 | 16,7 |
| Trockenhitze-Schrumpf 200°C | 5,8 | 3,9 | 2,1 | 3,3 |
| SV des Garn-Materials | | 1,225 | | 1,229 |
| Doppelbrechung d. Garnmaterials | $114 \cdot 10^{-3}$ | | | $110 \cdot 10^{-3}$ |
| Dichte des Garnmaterials [g/cm$^3$] | 1,2315 | | | 1,2310 |
| COOH-Gehalt d. Garnmaterials [mg/kg] | | 13,8 | | 11,8 |
| Knotenfestigkeit [cN/tex] | | 23,4 | | |
| Schlingenfestigkeit [cN/tex] | | 32,8 | | |

## Patentansprüche

1. Multifilamentgarn mit hoher Hydrolyse- und Aminolyseresistenz aus einem Polyester auf Basis von Poly-(1,4-bis-methylen-cyclohexyl-terephthalat), bei dem mindestens 85 mol-% der Diol-Baugruppen des Polyesters 1,4-bis-methylen-cyclohexyl-Gruppen sind und das Garn nach einer Hydrolyse- oder Aminolysebehandlung eine Restfestigkeit von mindestens 85 % der Anfangsfestigkeit hat, dadurch gekennzeichnet, daß das Garn eine feinheitsbezogene Höchstzugkraft von über 40 cN/tex aufweist, daß die Restfestigkeit nach einer Aminolysebehandlung in einer 5 %igen Ethylendiaminlösung von 80 °C und einer Lagerzeit von 48 Stunden bzw. nach einer Hydrolysebehandlung, bei der das Garn 72 Stunden in Sattdampf bei 135 °C gelagert ist, vorhanden ist und daß es aus Polyestern besteht, deren Polymerketten aus

85 bis 100 Mol.-% Baugruppen der Formel I

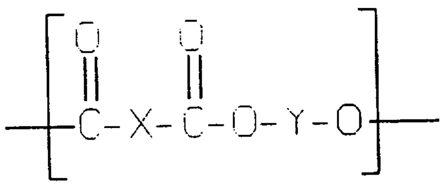

(I)

und 15 bis 0 Mol.-% Baugruppen der Formel II

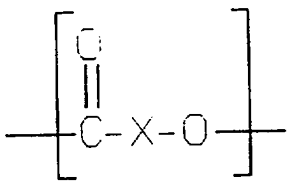

(II)

aufgebaut sind, worin

X zu mehr als 85 Mol.-% aromatische Reste mit 5 bis 16, vorzugsweise 6 bis 12 C-Atomen und maximal 15 Mol.-% aliphatische Reste mit 4 bis 10 Kohlenstoffatomen, vorzugsweise 6 bis 8 Kohlenstoffatomen, bedeutet,

Y zu mindestens 85 Mol.-% 1,4-Bis-methylen-cyclohexangruppen und zu maximal 15 Mol.-% geradkettiges oder verzweigtes Alkandiyl mit 2 bis 16, vorzugsweise 2 bis 8, C-Atomen oder Reste der Formel $-(CH_2CHR-O)_n-CH_2CHR-$, worin R für Methyl oder Wasserstoff steht und n eine ganze Zahl von 1 bis 40 bedeutet, wobei n = 1 oder 2 für Anteile bis zu 15 Mol.-% bevorzugt sind und Gruppen mit n = 10 bis 40 vorzugsweise nur in Anteilen von unter 5 Mol.-% vorhanden sind, oder Reste der Formel $-(CH_2)_q-Q-(CH_2)_q-$ bedeutet, worin Q für O oder S (ein Sauerstoff- oder Schwefelatom) steht, wobei q eine ganze Zahl von 2 bis 8 bedeutet oder Q Cycloalkan-diyl, oder ein ein- oder zweikerniger kondensierter oder nicht kondensierter aromatischer Rest, insbesondere Phenylen oder eine Rest der Formel III

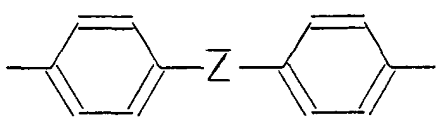

(III)

ist,
worin Z Polymethylen oder Alkylen mit 1 bis 4 Kohlenstoffatomen, $-SO_2-$, -COO-, -O- oder -S- bedeutet.

**2.** Multifilamentgarn gemäß Anspruch 1, dadurch gekennzeichnet, daß das Garn eine feinheitsbezogene Höchstzugkraft von über 40 cN/tex und einen Trockenhitzeschrumpf $S_{200}$ von unter 10 % aufweist.

**3.** Multifilamentgarn gemäß mindestens einem der Ansprüche 1 und 2, dadurch gekennzeichnet, daß das Garn eine feinheitsbezogene Höchstzugkraft von über 45 cN/tex und einen Trockenhitzeschrumpf $S_{200}$ von unter 10 % aufweist.

**4.** Multifilamentgarn gemäß mindestens einem der Ansprüche 1 bis 3, dadurch gekennzeichnet, daß das Garn eine feinheitsbezogene Höchstzugkraft von über 40 cN/tex und einen Trockenhitzeschrumpf $S_{200}$ von unter 5 % aufweist.

5. Multifilamentgarn gemäß mindestens einem der Ansprüche 1 bis 4, dadurch gekennzeichnet, daß das Garn eine feinheitsbezogene Höchstzugkraft von über 50 cN/tex und einen Trockenhitzeschrumpf $S_{200}$ von über 7 % aufweist.

6. Multifilamentgarn gemäß mindestens einem der Ansprüche 1 bis 5, dadurch gekennzeichnet, daß zwischen der feinheitsbezogenen Höchstzugkraft F des Garns und seinem Trockenhitzeschrumpf $S_{200}$ der aus Gleichung (1) ersichtliche Zusammenhang besteht:

$$F = K+0,267*S_{200}+0,054*S_{200}^2 \qquad (1)$$

wobei der Summand K einen Wert von über 40, vorzugsweise von 44 bis 49, hat, und $S_{200}$ ein Wert von 0 bis 20, vorzugsweise von 0 bis 12 ist.

7. Multifilamentgarn gemäß mindestens einem der Ansprüche 1 bis 6 dadurch gekennzeichnet, daß es aus Polyestern besteht, die ausschließlich aus Baugruppen der Formel I aufgebaut sind, in denen 90 bis 100 Mol.-%, vorzugsweise 95 bis 100 Mol.-%, der Reste X p-Phenylenreste und 0 bis 10 Mol.-%, vorzugsweise 0 bis 5 Mol.-% der Reste X m-Phenylenreste sind.

8. Multifilamentgarn gemäß mindestens einem der Ansprüche 1 bis 7, dadurch gekennzeichnet, daß es aus Polyestern besteht, bei denen 85 bis 100 Mol.-% der Dioleinheiten 1,4-Bis-methylen-cyclohexaneinheiten und
0 bis 15 Mol% Ethylenglycoleinheiten und
0 bis 3 Mol.-% längerkettige Dioleinheiten sind.

9. Multifilamentgarn gemäß mindestens einem der Ansprüche 1 bis 8, dadurch gekennzeichnet, daß mindestens 85 mol.-% der Baugruppen des Polyesters 1,4-bis-methylen-cyclohexyl-terephthalat-Gruppen sind.

10. Verfahren zur Herstellung von Multifilamentgarn mit hoher Hydrolyse-und Aminolyseresistenz aus einem Polyester auf Basis von Poly-(1,4-bis-methylencyclohexyl-terephthalat), wobei der Polyester in an sich bekannter Weise durch Aufschmelzen, Schmelzefiltration und Extrusion aus der Schmelze gesponnen, die ersponnenen Filamente durch Anblasen mit Kühlluft abgekühlt, abgezogen, verstreckt und fixiert werden, dadurch gekennzeichnet,

   daß die Schmelzetemperatur auf 295 bis 305 °C gehalten wird, die Filamente mit einer Spinnabzugsgeschwindigkeit von unter 1500 m/min. abgezogen werden,
   daß die ersponnenen Filamente kontinuerlich oder diskontinuierlich mindestens zweistufig verstreckt werden, wobei die Vorverstreckung, die mehr als 70 % der Gesämtverstreckung beträgt, bei einer Temperatur zwischen 90 und 120 °C durchgeführt wird und in der zweiten Verstreckstufe, die bei einer Temperatur oberhalb 240 °C durchgeführt wird, ein Verstreckverhältnis von > 1:1,2 eingestellt wird, und
   daß die verstreckten Filamente einer Fixier- und Relaxationsbehandlung bei Temperaturen oberhalb 230°C mit einem Schrumpfverhältnis von 1:0,98 bis 1:0,8 oder einer dritten Verstreckung bei Temperaturen oberhalb 230 °C mit einem Streckverhältnis von 1:1,05 bis 1:1,2 unterworfen werden.

11. Verfahren gemäß Anspruch 10, dadurch gekennzeichnet, daß die Spinnbedingungen, insbesondere die Intensität der Kühlung und die Abzugsgeschwindigkeit, so eingestellt werden, daß die Filamente eine Dichte von unter 1,2 $g/cm^3$ aufweisen.

**Claims**

1. A high hydrolysis and aminolysis resistance multifilament yarn composed of a polyester based on poly(1,4-cyclohexanedimethylene terephthalate), wherein at least 85 mol % of the diol-derived groups of the polyester are 1,4-cyclohexanedimethylene groups and the yarn has a post hydrolysis or aminolysis treatment strength of at least 85 % of the original strength, characterized by a tenacity of above 40 cN/tex, by said post-treatment strength being present after aminolysis treatment in a 5 % strength ethylenediamine solution at 80°C and a storage time of 48 hours or after hydrolysis treatment comprising storage of said yarn in saturated steam at 135°C for 72 hours, and wherein the polyester is composed of polymer chains containing from 85 to 100 mol % of groups of the formula I

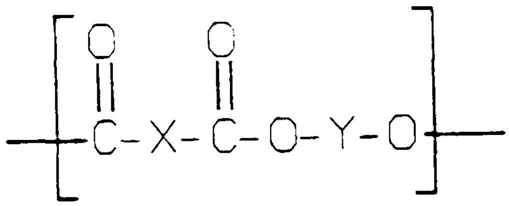

(I)

and from 15 to 0 mol % of groups of the formula II

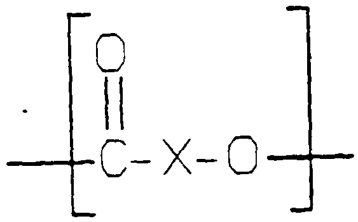

(II)

where

X comprises at least 85 mol % of aromatic radicals having from 5 to 16, preferably from 6 to 12, carbon atoms and not more than 15 mol % of aliphatic radicals having from 4 to 10 carbon atoms, preferably from 6 to 8 carbon atoms,

Y comprises at least 85 mol % of 1,4-cyclohexanedimethylene groups and not more than 15 mol % of straight-chain or branched alkanediyl having from 2 to 16, preferably from 2 to 8, carbon atoms, or
radicals of the formula-$(CH_2CHR-O)_n-CH_2CHR-$, where R is methyl or hydrogen and n is an integer from 1 to 40, n = 1 or 2 being preferred for proportions up to 15 mol % and groups having n = 10 to 40 preferably being present only in proportions of below 5 mol %, or
radicals of the formula $-(CH_2)_q-(Q)-(CH_2)_q-$, where
Q is O or S (an oxygen or sulfur atom), and q is an integer from 2 to 8, or
Q is cycloalkanediyl or a unicyclic or bicyclic fused or unfused aromatic radical, in particular phenylene, or a radical of the formula III

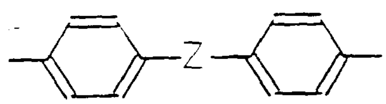

(III)

where Z is polymethylene or alkylene having from 1 to 4 carbon atoms, $-SO_2-$, -COO-, -O- or -S-.

2. The multifilament yarn of claim 1, characterized by a tenacity of above 40 cN/tex and a dry heat shrinkage S200 of below 10 %.

3. The multifilament yarn of at least one of claims 1 and 2, characterized by a tenacity of above 45 cN/tex and a dry heat shrinkage $S_{200}$ of below 10 %.

4. The multifilament yarn of at least one of claims 1 to 3, characterized by a tenacity of above 40 cN/tex and a dry heat shrinkage $S_{200}$ of below 5 %.

5. The multifilament yarn of at least one of claims 1 to 4, characterized by a tenacity of above 50 cN/tex and a dry heat shrinkage $S_{200}$ of above 7 %.

6. The multifilament yarn of at least one of claims 1 to 5, for which the relationship between the tenacity F of the yarn

and its dry heat shrinkage $S_{200}$ is given by the equation (1):

$$F = K+0.267*S_{200}+0.054*S_{200}^{2} \quad (1)$$

where the summand K is above 40, preferably 44 to 49, and $S_{200}$ is from 0 to 20, preferably from 0 to 12.

**7.** The multifilament yarn of at least one of claims 1 to 6, wherein the polyester is exclusively composed of groups of the formula I in which from 90 to 100 mol %, preferably from 95 to 100 mol %, of the radicals X are p-phenylene radicals and from 0 to 10 mol %, preferably from 0 to 5 mol %, of the radicals X are m-phenylene radicals.

**8.** The multifilament yarn of at least one of claims 1 to 7, wherein, in the polyester, from 85 to 100 mol % of the diol units are 1,4-cyclohexanedimethylene units, from 0 to 15 mol % of the diol units are ethylene glycol units, and from 0 to 3 mol % of the diol units are longer-chain diol units.

**9.** The multifilament yarn of at least one of claims 1 to 8, wherein at least 85 mol % of the groups making up the polyester are 1,4-cyclohexanedimethylene terephthalate groups.

**10.** A process for producing high hydrolysis and aminolysis resistance multifilament yarn composed of a polyester based on poly(1,4-cyclohexanedimethylene terephthalate) by the conventional steps of melting the polyester, filtering the melt, extruding the melt through a spinneret, cooling the spun filaments by quenching with air, followed by take-off, drawing and setting, which comprises
maintaining the temperature of the melt at from 295 to 305 °C, taking off the filaments at a spinning take-off speed of below 1500 m/min,
drawing the spun filaments continuously or batchwise in at least two stages, the pre-draw, which accounts for more than 70 % of the total draw, being carried out at a temperature between 90 and 120 °C and the second drawing stage, which is carried out at a temperature above 240 °C, being used to set a draw ratio of > 1:1.2, and
subjecting the drawn filaments to a setting and relaxing treatment at temperatures above 230 °C using a shrinkage ratio of from 1:0.98 to 1:0.8 or to a third drawing at temperatures above 230 °C using a draw ratio of from 1:1.05 to 1:1.2.

**11.** The process of claim 10, wherein the spinning conditions, especially the intensity of the cooling and the take-off speed, are controlled in such a way that the filaments have a density of below 1.2 $g/cm^3$.

**Revendications**

**1.** Filé multifilament ayant des résistances à l'hydrolyse et à l'aminolyse élevées en un polyester à base de poly-1,4-bis-méthylène-cyclohexyltéréphtalate, dans lequel au moins 85 % des éléments constitutifs diol du polyester sont des groupes 1,4-bis-méthylène-cyclohexyle et le filé possède, après un traitement hydrolytique et aminolytique, une résistance résiduelle d'au moins 85 % de la résistance initiale, caractérisé en ce que le filé présente une résistance en traction maximale relative à la finesse supérieure à 40 cN/tex, en ce que la résistance résiduelle est présente après un traitement aminolytique dans une solution d'éthylène diamine à 5 % à 80°C et une durée de conservation de 48 heures, respectivement après un traitement hydrolytique dans lequel le fil est conservé pendant 72 heures en atmosphère de vapeur saturée à 135°C, et en ce qu'il est constitué par des polyesters, dont les chaînes polymères sont constituées
de 85 à 100 % molaires d'éléments constitutifs de formule I

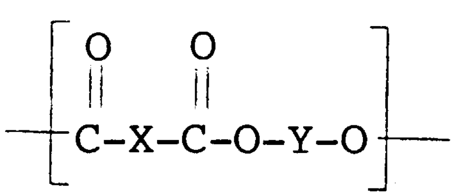

(I)

et de 15 à 0 % molaires d'éléments constitutifs de formule II

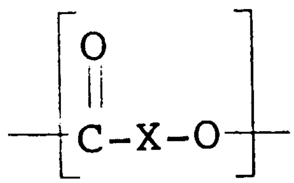

(II)

où

X représente plus de 85 % molaires de restes aromatiques présentant 5 à 16, de préférence 6 à 12 atomes de carbone et 15 % molaires au maximum de restes aliphatiques présentent 4 à 10 atomes de carbone, de préférence de 6 à 8 atomes de carbone,

Y représente au moins 85 % molaires de groupes 1,4-bis-méthylène-cyclohexane et 15 % molaires au maximum de restes alcanediyle à chaîne droite ou ramifiée présentent 2 à 16, de préférence 2 à 8 atomes de carbone ou des restes de formule $-(H_2CHR-O)n-CH_2CHR-$, où R représente des groupes méthyle ou des atomes d'hydrogène et n est un nombre entier de 1 à 40, en préférant n = 1 ou 2 pour des taux allant jusqu'à 15 %, et des groupes avec n = 10 à 40 n'étant de préférence présents que pour des taux inférieurs à 5 % molaires, ou représente
des restes de formule $-(CH_2)_q-Q-(CH_2)_q$,
où
Q représente des atomes de O ou S (atomes de soufre ou d'oxygène), q étant un nombre entier de 2 à 8, ou Q représente un groupe cycloalcane-diyle ou un reste condensé mono- ou bicyclique ou un reste aromatique non condensé, en particulier phénylène ou un reste de formule III

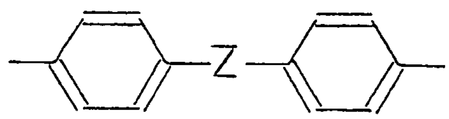

(III),

où

Z représente des groupes polyméthylène ou alkylène présentant 1 à 4 atomes de carbone, $-SO_2-$, -COO-, -O- ou -S-.

**2.** Filé multifilament selon la revendication 1, caractérisé en ce que le filé présente une résistance en traction maximale relative à la finesse supérieure à 40 cN/tex et un retrait thermique au séchage $S_{200}$ inférieur à 10 %.

**3.** Filé multifilament selon au moins l'une des revendications 1 et 2, caractérisé en ce que le filé présente une résistance en traction maximale relative à la finesse supérieure à 45 cN/tex et un retrait thermique au séchage $S_{200}$ inférieur à 10 %.

**4.** Filé multifilament selon au moins l'une des revendications 1 à 3, caractérisé en ce que le filé présente une résistance en traction maximale relative à la finesse supérieure à 40 cN/tex et un retrait thermique au séchage $S_{200}$ inférieur à 5 %.

**5.** Filé multifilament selon au moins l'une des revendications 1 à 4, caractérisé en ce que le filé présente une résistance en traction maximale relative à la finesse supérieure à 50 cN/tex et un retrait thermique au séchage $S_{200}$ supérieur à 7 %.

**6.** Filé multifilament selon au moins l'une des revendications 1 à 5, caractérisé en ce que la résistance en traction maximale relative à la finesse F (en cN/tex) du filé et son retrait thermique au séchage $S_{200}$ découlent de l'équation (1) :

$$F = K + 0{,}267^*S_{200} + 0{,}054^*S_{200}^2 \quad (1)$$

où la cumulande K est une valeur supérieure à 40, de préférence de 44 à 49, et $S_{200}$ est une valeur de 0 à 20, de préférence de 0 à 12.

**7.** Filé multifilament selon au moins l'une des revendications 1 à 6, caractérisé en ce qu'il est constitué par des polyesters qui se composent exclusivement d'éléments constitutifs de formule I dans lesquels 90 à 100 % molaires, de préférence de 95 à 100 % molaires, des restes X représentent des restes p-phénylène et de 0 à 10 % molaires, de préférence de 0 à 5 % molaires des restes X représentent des restes m-phénylène.

**8.** Filé multifilament selon au moins l'une des revendications 1 à 7, caractérisé en ce qu'il est constitué par des polyesters où

85 à 10 % molaires des unités diol sont des unités 1,4-bis-méthylène-cyclohexane et
0 à 15 % molaires sont des unités éthylène glycol et
0 à 3 % molaires sont des unités diol à chaîne plus longue.

**9.** Filé multifilament selon au moins l'une des revendications 1 à 8, caractérisé en ce que au moins 85 % molaires des éléments constitutifs du polyester sont des groupes 1,4-bis-méthylène-cyclohexyl-téréphtalate.

**10.** Procédé de préparation de filés multifilaments ayant des résistances élevées à l'hydrolyse et à l'aminolyse à partir d'un polyester à base de poly-1,4-bis-méthylène-cyclohexyltéréphtalate, le polyester étant filé de façon connue en soi par fusion, filtration de la matière en fusion et extrusion de la matière fondue, les filaments filés étant refroidis par soufflage à l'air de refroidissement, avancés, étirés et fixés, caractérisés

en ce que la température de fusion est maintenue dans le domaine de 295 à 305°C, les filaments étant avancés à une vitesse de filage inférieure à 1500 m/min,
en ce que les filaments filés sont étirés en continu ou en discontinu en au moins deux stades, le pré-étirage, lequel représente plus de 70 % de l'étirage total, étant mis en oeuvre à une température comprise entre 90 et 120°C et dans le second stade à une température supérieure à 240°C, un rapport d'étirage de >1:1,2 étant établi, et
en ce que les filaments étirés sont soumis à un traitement de fixage et de relaxation à une température supérieure à 230°C pour un rapport de retrait de 1:0,98 à 1:0,8 ou à un troisième étirage à une température supérieure à 230°C pour un rapport d'étirage de 1:1,05 à 1:1,2.

**11.** Procédé selon la revendication 10, caractérisé en ce que les conditions de filage, en particulier l'intensité du refroidissement et la vitesse d'avancement sont établies de façon telle que les filaments présentent une masse volumique inférieure à 1,2 $g/cm^3$.

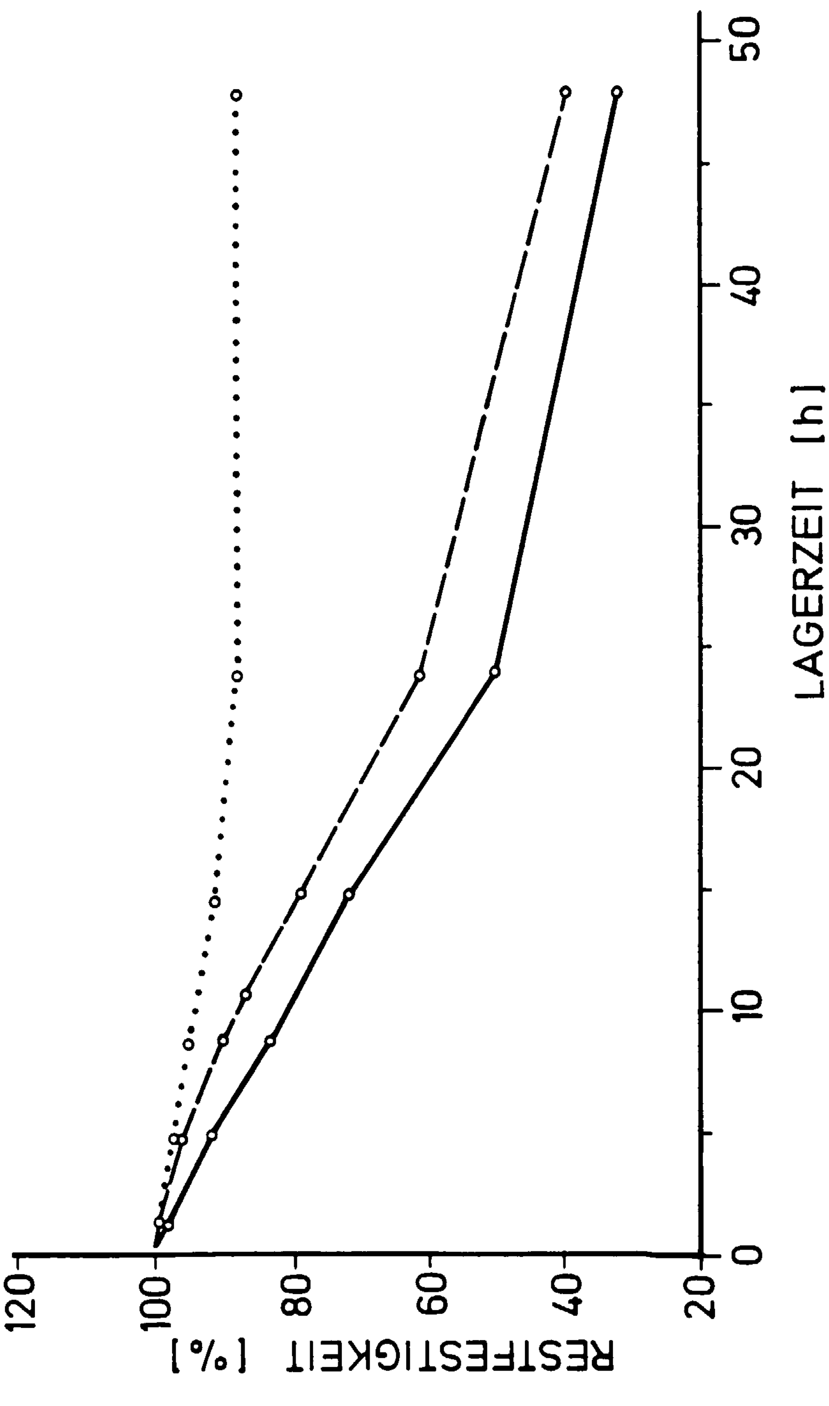


*Fig. 1*

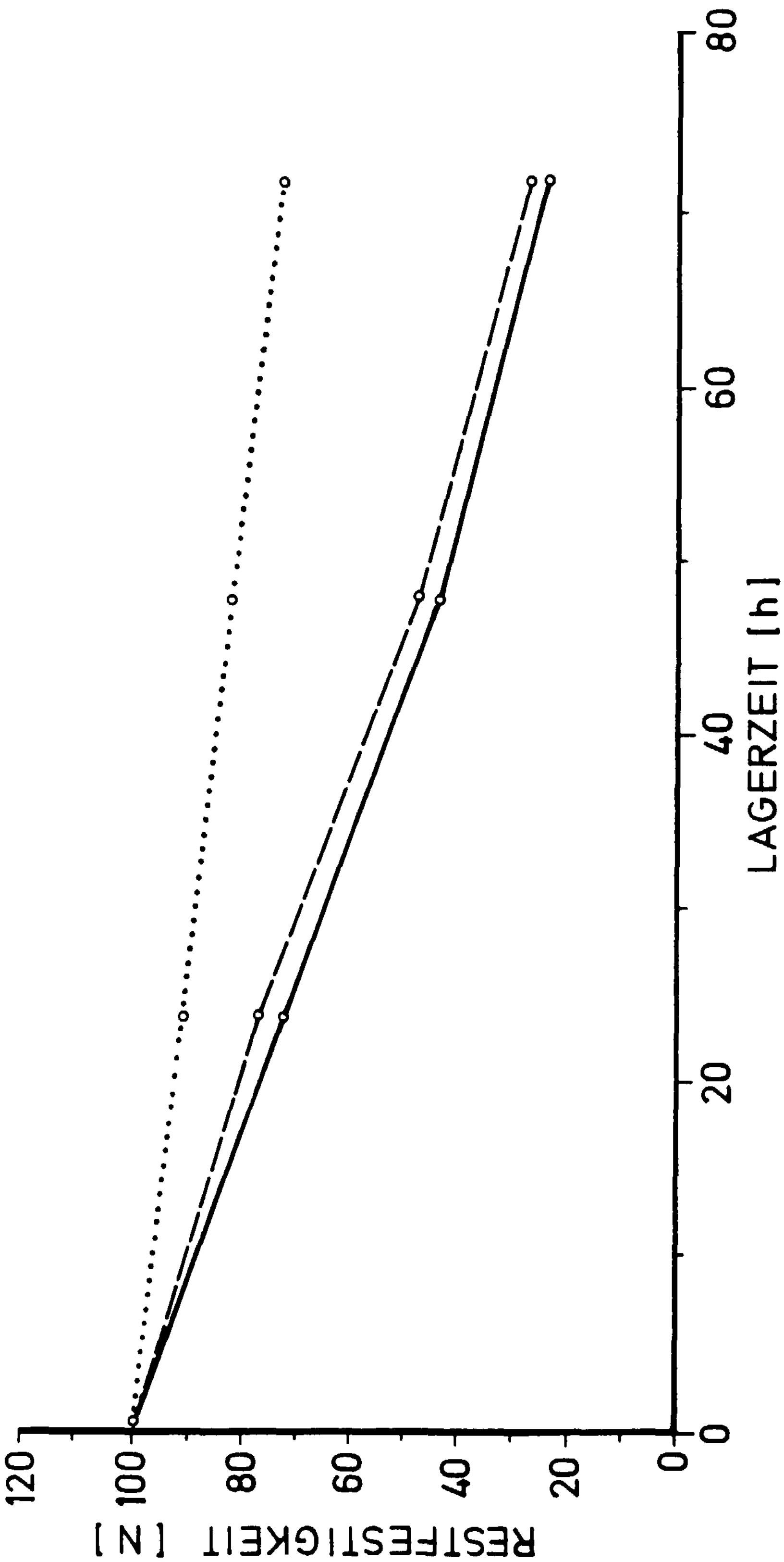


Fig. 2

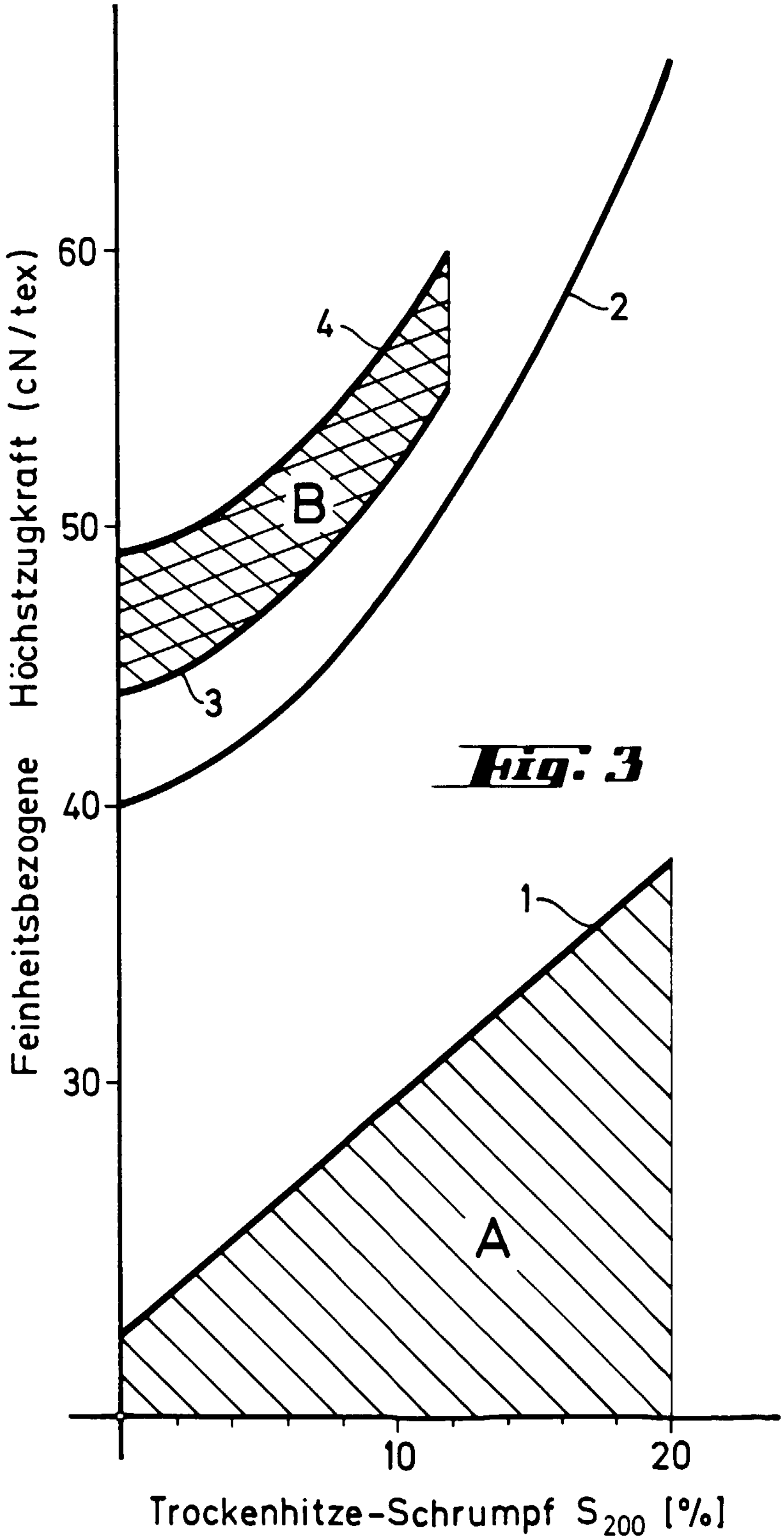
Feinheitsbezogene Höchstzugkraft (cN/tex)
60
50
40
30
10
20
Trockenhitze-Schrumpf $S_{200}$ [%]
1
2
3
4
A
B

Fig. 3